# EUROPÄISCHE PATENTSCHRIFT

(11) **EP 4 272 896 B1**
(45) Veröffentlichungstag und Bekanntmachung des Hinweises auf die Patenterteilung: **24.07.2024**
(21) Anmeldenummer: 22171174.0
(22) Anmeldetag: 02.05.2022
(51) Int. Cl.: B25B 27/00, F16M 13/02, F16M 11/04, G08B 13/196, G08B 17/113

(54) **VORRICHTUNG ZUM LÖSBAREN VERANKERN EINES BAUTEILS AN EINER ÜBERKOPFSTRUKTUR**
APPARATUS FOR REVERSIBLY FIXING A COMPONENT TO AN OVERHEAD STRUCTURE
DISPOSITIF D'ANCRAGE AMOVIBLE D'UN COMPOSANT À UNE STRUCTURE AÉRIENNE

(43) Veröffentlichungstag der Anmeldung: 08.11.2023
(73) Patentinhaber: CogVis Software und Consulting GmbH, 1040 Wien (AT)
(72) Erfinder: SCHORNSTEINER, Gregor, 83395 Freilassing (DE); AUER, Johannes, 5020 Salzburg (AT); BLIEM, Alexander, 5580 Tamsweg (AT); STEINBACHER, Andreas, 5082 Grödig (AT); HELL, Simon, 5020 Salzburg (AT); PLANINC, Rainer, 1220 Wien (AT); BRANDSTOETTER, Michael, 1150 Wien (AT)
(74) Vertreter: Weiser & Voith Patentanwälte Partnerschaft

(56) Entgegenhaltungen:
- DE-A1- 2 435 827
- DE-T2- 60 108 971
- US-A- 5 649 255
- US-A1- 2019 004 401

## Beschreibung

Die vorliegende Erfindung betrifft eine Vorrichtung zum lösbaren Verankern eines Bauteils an einer Überkopfstruktur, insbesondere einer Zimmerdecke. Die Vorrichtung umfasst einen Grundkörper zur Montage an der Überkopfstruktur, eine Halterung für den Bauteil, und eine Bedienstange mit einem Griffende und einem gegenüberliegenden Kopfende, das mit einem Gewinde oder Bajonett zum lösbaren Verbinden mit einem Gegengewinde oder -bajonett der Halterung versehen ist.

Bauteile wie Leuchten, Rauch- und Feuermelder, Sensoren, insbesondere Bewegungssensoren, Kameras etc. sollen zu ihrer Verwendung oft an der Zimmerdecke, einem Überkopf-Träger oder einer anderen Überkopfstruktur sicher verankert werden. Häufig ist dabei erwünscht, einen so verankerten Bauteil z.B. zu seinem Ersatz oder zum Tausch einer seiner Komponenten (eines Leuchtmittels, einer Batterie od.dgl.) auf einfache Weise abzunehmen und danach wieder an der Überkopfstruktur sicher zu verankern. Meist wird zum Erreichen der Überkopfstruktur und Verankern (und gleichermaßen zum Abnehmen) des Bauteils eine Leiter verwendet, die beim Transport sperrig und beim Aufstellen raumgreifend ist und deren Benutzung nicht ganz gefahrlos ist, insbesondere bei Überkopfarbeiten in hohen Räumen.

Es wurde daher bereits vorgeschlagen (US 5 649 255 B, DE 601 08 971 T2), an der Überkopfstruktur einen Grundkörper dauerhaft zu montieren, an welchem eine Halterung für den Bauteil mithilfe einer Bedienstange lösbar verankert werden kann. Vor ihrer Verankerung am Grundkörper wird an der Halterung der Bauteil montiert und die Bedienstange mit der Halterung lösbar verbunden. Darauf kann die Halterung mithilfe der Bedienstange vom Boden aus, d.h. ohne Leiter od.dgl., am Grundkörper verankert werden. Zum Lösen der Halterung mitsamt dem Bauteil vom Grundkörper wird wiederum die Bedienstange oder ein ähnliches Werkzeug verwendet, d.h. auch das Lösen der Verankerung und Abnehmen des Bauteils von der Überkopfstruktur erfolgt ohne Leiter vom Boden aus.

Im Fall der US 5 649 255 B wird dazu eine Bedienstange mit komplexem Hebelmechanismus vorgeschlagen, welcher die Handhabung insbesondere beim Abnehmen des Bauteils erschwert. Die DE 601 08 971 T2 zeigt einerseits eine Verankerung mithilfe von Permanentmagneten, welche infolge der Magnete nur eine begrenzte Haltekraft erzeugen kann und insbesondere in hohen Räumen schwierig zu lösen ist. Andererseits offenbart die DE 601 08 971 T2 eine Variante mit unterschiedlichen Bedienstangen für das Verankern und das Losen. US 2019/004401 A1 offenbart eine Vorrichtung gemäß dem Oberbegriff des Anspruchs 1.

Die Erfindung setzt sich zum Ziel, eine Vorrichtung zu schaffen, welche den Bauteil in einfacher und sicherer Weise am der Überkopfstruktur verankern und ebenso sicher und einfach lösen lässt.

Dieses Ziel wird erfindungsgemäß mit einer Vorrichtung der einleitend genannten Art erreicht, bei welcher der Grundkörper und die Halterung die beiden Teile einer Steckkupplung bilden, welche durch lineares Ineinanderstecken der beiden Teile in einer Steckrichtung schließbar ist, wobei an einem der Teile zumindest ein Schnappriegel quer zur Steckrichtung beweglich gelagert ist und der andere Teil zumindest eine korrespondierende Hinterschneidung zum Verrasten des Schnappriegels in einer ineinandergesteckten Stellung der Teile hat. An der Bedienstange ist eine Auslösestange entlang einer zur Bedienstange parallelen Bahn verschieblich gelagert und an der Steckkupplung ein am Schnappriegel angreifender Mitnehmer beweglich gelagert, welcher, wenn die Bedienstange mit der Halterung verbunden ist, in die Bahn der Auslösestange ragt und dazu ausgebildet ist, ein Verschieben der Auslösestange in Richtung des Kopfendes der Bedienstange in ein Entrasten des Schnappriegels umzusetzen.

Zum Verankern wird einerseits der Grundkörper an der Überkopfstruktur und andererseits der Bauteil an der Halterung montiert; ferner wird die Bedienstange über das Gegengewinde oder -bajonett mit der Halterung sicher verbunden. Daraufhin ist zum Verankern der Halterung mitsamt dem daran montierten Bauteil an dem an der Überkopfstruktur montierten Grundkörper lediglich das lineare Ineinanderstecken der beiden Teile der Steckkupplung mithilfe der Bedienstange erforderlich, da der/die Schnappriegel beim Schließen der Steckkupplung an der Hinterschneidung verrastet/verrasten. Der Bauteil wird auf diese Weise einfach und sicher vom Boden aus ohne Leiter (über die Halterung und den Grundkörper) an der Überkopfstruktur verankert. Die Bedienstange kann danach aus dem Gegengewinde oder -bajonett der Halterung gelöst und anderswo verwendet werden.

Zum Abnehmen des Bauteils, z.B. um eine Komponente zu wechseln, genügt es, zunächst die Bedienstange wieder mit der Halterung zu verbinden und darauf die Auslösestange entlang ihrer Bahn nach oben, d.h. in Richtung des Kopfendes der Bedienstange zu verschieben, sodass sie den Mitnehmer aus der Bahn verdrängt und dieser den/die Schnappriegel entrastet, wodurch die Verankerung gelöst ist. Der Bauteil kann mitsamt der Halterung einfach und gefahrlos von der Überkopfstruktur genommen werden, da die Halterung über das Gewinde oder Bajonett mit der Bedienstange sicher verbunden ist.

Der zumindest eine Schnappriegel kann dabei entweder am Grundkörper oder an der Halterung gelagert sein, d.h. der Grundkörper oder die Halterung der genannte eine Teil der Steckkupplung sein. Bevorzugt ist der Grundkörper der genannte eine und die Halterung der genannte andere Teil der Steckkupplung. Die bei jedem Lösen und Verankern zu manipulierende Halterung kann dadurch einfacher und gewichtsparend aufgebaut werden.

In einer vorteilhaften Ausführungsvariante der Vorrichtung hat der Grundkörper die Form einer Scheibe, in oder auf welche die Halterung ein- bzw. aufsteckbar ist, wobei zumindest zwei über den Umfang der Scheibe verteilte Schnappriegel und korrespondierende Hinterschneidungen vorgesehen sind. Die über den Umfang verteilten Schnappriegel ergeben einen besonders sicheren Sitz der beiden Teile der Steckkupplung in ihrer ineinandergesteckten Stellung. Der Bauteil ist dadurch besonders sicher an der Überkopfstruktur verankert, auch wenn der Bauteil größere Masse hat. Besonders günstig ist dabei, wenn zwei einander diametral gegenüberliegende, gegenläufige Schnappriegel vorgesehen sind. Die gegenüberliegenden, gegenläufigen Schnappriegel bewirken eine gute Kraftaufnahme und folglich eine sichere Verankerung mit nur wenigen Elementen.

In einer bevorzugten Ausführungsform ist der Mitnehmer ein am genannten einen Teil der Steckkupplung um seine Achse drehbar gelagerter Ring, der einen ersten, in die genannte Bahn ragenden Kulissenabschnitt zum Zusammenwirken mit der Auslösestange und zumindest einen davon umfangsmäßig beabstandeten zweiten Kulissenabschnitt zum Zusammenwirken mit jeweils einem Schnappriegel hat. Auf diese Weise können alle Schnappriegel von einem einzigen gemeinsamen Mitnehmer entrastet werden. Die Kraftwirkung beim Entrasten ist unabhängig von der jeweiligen Ausrichtung der Schnappriegel. Die Federbelastung der/des Schnappriegel/s in Richtung der Verrastung kann je nach Bauform der zweiten Kulissenabschnitte auch von einer einzigen Feder, die z.B. unmittelbar am ringförmigen Mitnehmer angreift, auf den/die Schnappriegel aufgebracht werden.

Im Falle zweier einander diametral gegenüberliegender, gegenläufiger Schnappriegel ist dabei besonders günstig, wenn die ersten und zweiten Kulissenabschnitte an den Ecken eines gedachten gleichschenkligen Dreiecks angeordnet sind, wobei der erste Kulissenabschnitt an der Spitze des Dreiecks liegt. Die über die Auslösestange auf den ersten Kulissenabschnitt aufgebrachte Kraft wirkt auf diese Weise besonders effizient auf die beiden Schnappriegel.

In einer vorteilhaften Ausführungsform hat der Grundkörper elektrische Kontakte zum Kontaktieren des Bauteils. Der Bauteil kann auf dieser Weise mit elektrischer Energie versorgt und/oder an z.B. eine Datenleitung angeschlossen werden.

Die Auslösestange und der Mitnehmer können auf unterschiedliche Weise zusammenwirken, z.B. über einen Hebeltrieb, über Rollen od.dgl. Vorteilhaft ist, wenn die Auslösestange und/oder der Mitnehmer einander zugewandt je eine schräge Kontaktfläche haben/hat. Das führt zu einem besonders einfachen und zuverlässigen Umsetzen des Verschiebens der Auslösestange über den Mitnehmer in das Entrasten des Schnappriegels.

Einerseits kann die Halterung auf den Grundkörper aufgesteckt werden und diesen zumindest weitgehend aufnehmen. Günstig ist hingegen, wenn andererseits der Grundkörper eine Buchse zum Einstecken der Halterung hat. Die häufiger zu manipulierende Halterung kann auf dieser Weise kleiner ausgeführt sein; zugleich kann der Grundkörper zur festen Montage an der Überkopfstruktur über eine größere Montagefläche verfügen. Besonders günstig ist dabei, wenn sich die Buchse in Steckrichtung verengt und/oder die Halterung sich in Steckrichtung verjüngt. Das Einstecken der Halterung in den Grundkörper wird dadurch vereinfacht; dennoch ergibt sich ein spielfreier, sicherer Sitz der beiden Teile der Steckkupplung in ihrer ineinandergesteckten Stellung.

Die Erfindung wird nachfolgend anhand eines in den beigeschlossenen Zeichnungen dargestellten Ausführungsbeispiels näher erläutert. In den Zeichnungen zeigen:
Fig. 1 eine Vorrichtung gemäß der Erfindung mit an einer Überkopfstruktur verankertem Bauteil in einer Perspektivansicht von unten;
die Fig. 2a und 2b eine Steckkupplung der Vorrichtung von Fig. 1 in einer geöffneten (Fig. 2a) bzw. einer geschlossenen (Fig. 2b) Stellung jeweils in einem ausschnittsweisen Querschnitt entlang der Schnittlinie A-A von Fig. 3a;
die Fig. 3a und 3b die Steckkupplung der Fig. 2a und 2b mit Schnappriegeln in einer verrasteten (Fig. 3a) bzw. einer entrasteten (Fig. 3b) Stellung jeweils in einem Längsschnitt; und
die Fig. 4a - 4c die Steckkupplung der Fig. 2a und 2b in einer geöffneten (Fig. 4a) bzw. einer geschlossenen (Fig. 4b) Stellung sowie beim Entrasten aus der geschlossenen Stellung (Fig. 4c) jeweils in einem Querschnitt entlang der Schnittlinie B-B von Fig. 3a.

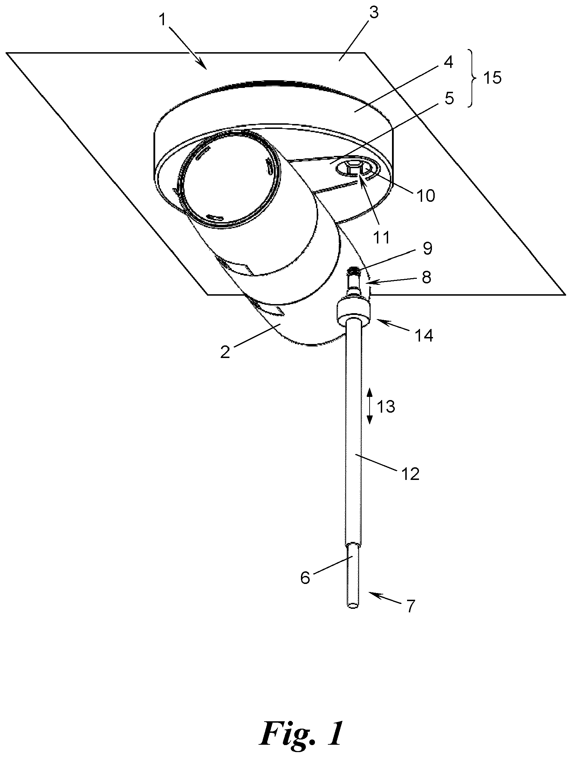

Fig. 1 zeigt eine Vorrichtung 1, die es erlaubt, einen Bauteil 2 an einer Überkopfstruktur 3 (hier: einer Zimmerdecke) zu verankern und davon wieder zu lösen. Der Bauteil 2 ist im vorliegenden Fall ein Bewegungssensor, könnte alternativ ein anderer Sensor, eine Kamera, ein Rauch- oder Feuermelder, eine Leuchte etc. sein bzw. zwei oder mehr solcher Funktionselemente enthalten.

Die Vorrichtung 1 umfasst einen Grundkörper 4, der an der Überkopfstruktur 3 montiert wird. Ferner umfasst die Vorrichtung 1 eine Halterung 5 für den Bauteil 2 und eine Bedienstange 6. In dem in Fig. 1 dargestellten Beispiel ist der Bauteil 2 bereits an der Halterung 5 montiert und über diese und den Grundkörper 4 an der Zimmerdecke 3 verankert.

Die Bedienstange 6 hat ein Griffende 7, an welchem eine Bedienperson die Bedienstange 6 ergreifen und manipulieren kann, und ein dem Griffende 7 gegenüberliegendes Kopfende 8. Das Kopfende 8 ist mit einem Gewinde 9 oder alternativ z.B. mit einem Bajonett od.dgl. versehen und kann in eine Öffnung 10 an der Halterung 5 eingeführt und mit einem dort angeordneten Gegengewinde oder -bajonett 11 der Halterung 5 und auf diese Weise mit der Halterung 5 verbunden werden, um die Halterung 5 mitsamt dem Bauteil 2 am Grundkörper 4 zu verankern oder davon zu lösen, wie im Folgenden näher ausgeführt wird.

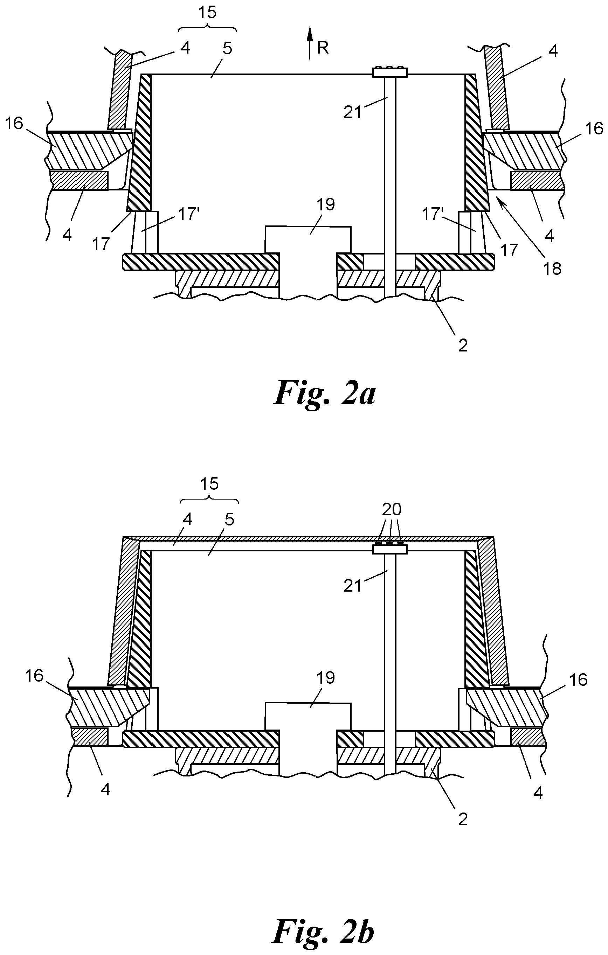

Zum Verankern des Bauteils 2 an der Überkopfstruktur 3 wird einerseits der Grundkörper 4 der Vorrichtung 1 an der Überkopfstruktur 3 montiert. Andererseits wird der Bauteil 2 an der Halterung 5 montiert, während noch die Halterung vom Grundkörper 4 getrennt ist. Um anschließend die Halterung 5 (mitsamt dem Bauteil 2) am bzw. im Grundkörper 4 zu verankern, wird die Bedienstange 6 mit dem Gegengewinde oder -bajonett 11 der Halterung 5 verbunden. Die Halterung 5 kann nun mitsamt dem Bauteil 2 mithilfe der Bedienstange 6 vom Griffende 7 aus manipuliert werden und in den Grundkörper 4 eingesteckt oder auf den Grundkörper 4 aufgesteckt werden, wie weiter unten unter Bezugnahme auf die Fig. 2a und 2b ausführlicher erläutert wird. Danach kann die Bedienstange 6 von der Halterung 5 gelöst (hier: abgeschraubt) und entfernt werden.

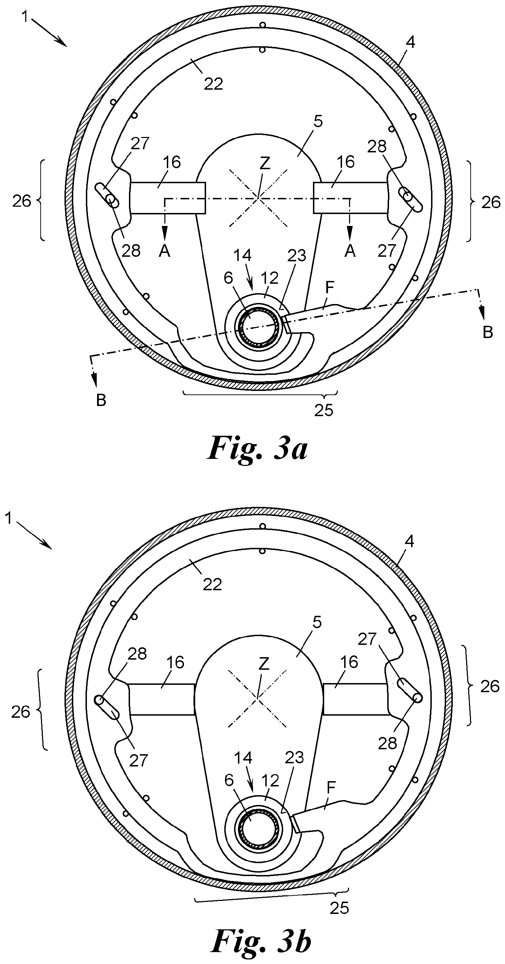

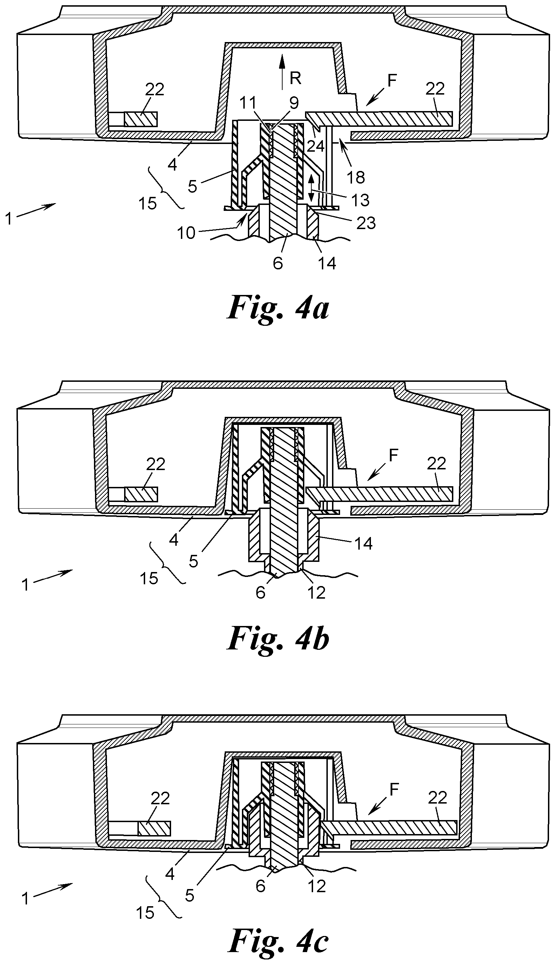

Zum Lösen der Verankerung ist an der Bedienstange 6 eine Auslösestange 12 gelagert, und zwar so, dass die Auslösestange 12 an der Bedienstange 6 entlang einer zu dieser parallelen Bahn 13 (in der in Fig. 1 dargestellten Stellung: in Vertikalrichtung) verschiebbar ist. Im Beispiel der Fig. 1 ist die Auslösestange 12 ein die Bedienstange 6 umgebendes Rohr und hat zum Auslösen einen optional verbreiterten Kopf 14, wie unter Bezugnahme auf die Fig. 3 und 4 weiter unten ausführlich erläutert. Alternativ kann die Auslösestange 12 z.B. parallel zu und neben der Bedienstange 6 an dieser gelagert sein und/oder keinen verbreiterten Kopf 14 haben; in all diesen Fällen ist die Auslösestange 12 vom Griffende 7 der Bedienstange 6 aus für die Bedienperson erreichbar und reicht bis in die Nähe des Kopfendes 8 der Bedienstange 6.

Gemäß den Fig. 2a und 2b bilden der (hier nur ausschnittsweise dargestellte) Grundkörper 4 und die Halterung 5 die beiden Teile einer Steckkupplung 15. Die Steckkupplung 15 wird durch lineares Ineinanderstecken ihrer beiden Teile in einer Steckrichtung R geschlossen. In Fig. 2a sind die beiden Teile der Steckkupplung 15 (noch) nicht vollständig ineinandergesteckt und ist die Steckkupplung 15 somit (noch) nicht geschlossen. An einem der beiden Teile, in diesem Beispiel am Grundkörper 4, ist zumindest ein (hier: zwei) Schnappriegel 16 quer zur Steckrichtung R beweglich gelagert. Der andere Teil der Steckkupplung 15, in diesem Beispiel die Halterung 5, hat zumindest eine (hier: zwei) korrespondierende Hinterschneidung/en 17. Die Hinterschneidung 17 liegt dabei optional jeweils in einer Vertiefung oder Öffnung 17'. In der ineinandergesteckten Stellung der Teile der Steckkupplung 15, d.h. in ihrer geschlossener Stellung gemäß Fig. 2b, ist der bzw. sind die Schnappriegel 16 hinter der bzw. den Hinterschneidung/en 17 verrastet.

Schnappriegel 16, wie sie beispielsweise auch als Türfalle Verwendung finden, sind in Richtung ihrer verrasteten Stellung (Fig. 2b) kraftbeaufschlagt, insbesondere federbeaufschlagt, und haben eine schräge Anlauffläche für den genannten anderen Teil, um beim Ineinanderstecken der beiden Teile der Steckkupplung 15 gegen ihre Kraftbeaufschlagung zurückzuweichen.

Es versteht sich, dass auch anders als in den Fig. 2a und 2b dargestellt die Halterung 5 der genannte eine Teil der Steckkupplung 15 sein kann, welcher den zumindest einen Schnappriegel 16 lagert, und der Grundkörper 4 der genannte andere Teil der Steckkupplung 15 mit der zumindest einen korrespondierenden Hinterschneidung 17 sein kann. Im dargestellten Beispiel hat der Grundkörper 4 eine Buchse 18, in welche die Halterung 5 eingesteckt wird; alternativ könnte die Buchse 18 in der Halterung 5 vorgesehen sein, sodass die Halterung 5 auf den Grundkörper 4 aufgesteckt wird. Optional verengt sich die Buchse 18 in Steckrichtung R und verjüngt sich zusätzlich oder alternativ die Halterung 5 (bzw. wenn diese die Buchse 18 hat: der Grundkörper 4) in Steckrichtung R.

Der Bauteil 2 ist im dargestellten Fall mithilfe eines Flansches 19 an die Halterung 5 angeflanscht, könnte alternativ aber geschraubt, geklebt, geschweißt, genietet, genagelt etc. sein. Der Grundkörper 4 wird z.B. an die Überkopfstruktur 3 angeflanscht, geschraubt, geklebt, geschweißt, genietet, genagelt etc.

Optional hat der Grundkörper 4 elektrische Kontakte 20, mit welchen der Bauteil 2 z.B. mithilfe eines vom Bauteil 2 abstehenden Kontaktstempels 21 und/oder über die Halterung 5 elektrisch kontaktiert werden kann, d.h. elektrisch leitend mit z.B. einer Versorgungsspannungsquelle, einer Datenleitung od.dgl. verbunden werden kann.

Die Fig. 3 und 4 veranschaulichen das bereits weiter oben beschriebene Verrasten (Fig. 3a bzw. 4a und 4b) und insbesondere das Entrasten (Fig. 3b bzw. 4b und 4c) des zumindest einen Schnappriegels 16 mithilfe der Bedienstange 6 und der Auslösestange 12. Dadurch können beiden Teile der Steckkupplung 15 voneinander gelöst und die Steckkupplung 15 geöffnet werden, sodass der Bauteil 2 aus seiner Verankerung an der Überkopfstruktur 3 gelöst und abgenommen werden kann.

Im dargestellten Beispiel hat der Grundkörper 4 die Form einer runden oder mehreckigen Scheibe, in der die Buchse 18 liegt, in welche die Halterung 5 eingesteckt wird. In einer alternative Ausführungsformen wird wie erläutert die Halterung 5 auf den Grundkörper 4 aufgesteckt. In diesen beiden Ausführungsformen können zwei oder mehr über den Umfang der Scheibe verteilte Schnappriegel 16 und korrespondierende Hinterschneidungen 17, z.B. eine umlaufende Hinterschneidung 17 oder mehrere Hinterschneidungen 17 vorgesehen sein. Die Fig. 3a und 3b zeigen eine Variante mit zwei einander diametral gegenüberliegenden Schnappriegeln 16, die gegenläufig sind, d.h. hier radial nach innen, alternativ radial nach außen federbelastet sind.

In der in Fig. 4a gezeigten Stellung ist die Bedienstange 6 mit ihrem Gewinde 9 im Gegengewinde 11 im Inneren der Öffnung 10 der Haltung 5 verschraubt, die Auslösestange 12 ist vom Kopfende 8 der Bedienstange 6 entfernt, d.h. zurückgezogen, und die Halterung 5 ist (noch) nicht vollständig in die Buchse 18 des Grundkörpers 4 eingesteckt, was der in Fig. 2a gezeigten Stellung der Steckkupplung 15 entspricht. Wird die Halterung 5 in Steckrichtung R bis zum Verrasten der Schnappriegel 16 an den Hinterschneidungen 17 (Fig. 2b) in die Buchse 18 eingesteckt, ergibt sich die Stellung gemäß den Fig. 3a bzw. 4b, und die Bedienstange 6 kann von der Halterung 5 abgeschraubt werden.

Zum Lösen der Steckkupplung 5 wird zunächst die Bedienstange 6 mit der Halterung 5 verbunden, z.B. mit ihrem Gewinde 9 im Gegengewinde 11 verschraubt. Die Auslösestange 12 ist dabei zunächst in ihrer vom Kopfende 8 der Bedienstange 6 entfernten Grundstellung (Fig. 4b). An der Steckkupplung 15, z.B. am Grundkörper 4 oder an der Halterung 5, ist ein Mitnehmer 22 beweglich gelagert, der an dem bzw. den Schnappriegel/n 16 angreift. Der Mitnehmer 22 ragt in die Bahn 13 der Auslösestange 12, insbesondere ihres optional verbreiterten Kopfes 14. Wird die Auslösestange 12 daraufhin in Richtung des Kopfendes 8 der Bedienstange 6 verschoben, trifft ihr Kopf 14 auf den Mitnehmer 22 und verdrängt ihn aus der Bahn 13, u.zw. etwa quer dazu, wodurch der Mitnehmer 22 den zumindest einen Schnappriegel 16 entrastet (Fig. 3b bzw. 4c). D.h. der Mitnehmer 22 setzt das Verschieben der Auslösestange 12 in das Entrasten des/der Schnappriegel 16 um. Für jeden Schnappriegel 16 kann dabei jeweils ein eigener Mitnehmer 22 oder für mehrere oder sogar alle Schnappriegel 16 ein gemeinsamer Mitnehmer 22 vorgesehen sein.

Optional kann die Auslösestange 12 eine dem Mitnehmer 22 zugewandte schräge Kontaktfläche 23 und/oder der Mitnehmer 22 eine der Auslösestange 12 zugewandte schräge Kontaktfläche 24 haben, um den Mitnehmer 22 beim Verschieben der Auslösestange 12 entlang ihrer Bahn 13 in Richtung des Kopfendes 8 der Bedienstange 6 etwa quer zur Bahn 13 aus dieser zu verdrängen.

Der Mitnehmer 22 kann als Schieber, Kipphebel oder Hebelgetriebe, als Zugriemen od.dgl. ausgebildet und dabei z.B. linearverschieblich, dreh- oder schwenkbar gelagert sein, u.zw. entweder an demselben Teil der Steckkupplung 15 wie die Schnappriegel 16 oder am anderen Teil. Im letzteren Fall drückt der Mitnehmer 22 den bzw. die Schnappriegel 16 beispielsweise von der Seite der Hinterschneidung/en 17 aus dieser/diesen hinaus (nicht dargestellt).

Im dargestellten Beispiel ist der Mitnehmer 22 ein Ring, der am genannten einen Teil der Steckkupplung 15 (hier: am Grundkörper 4) um seine zentrale Achse Z drehbar gelagert ist. Um mit der Auslösestange 12 in der erläuterten Art und Weise zusammenzuwirken, hat der ringförmige Mitnehmer 22 einen ersten, in die genannte Bahn 13 der Auslösestange 12 ragenden Kulissenabschnitt 25, z.B. einen Fortsatz F. Beim Verschieben der Auslösestange 12 und Verdrängen des ersten Kulissenabschnitts 25 aus der Bahn 13 wird der ringförmige Mitnehmer 22 deshalb um seine Achse Z gedreht.

Der Mitnehmer 22 hat in diesem Beispiel einen oder mehrere vom ersten Kulissenabschnitt 25 umfangsmäßig beabstandete zweite Kulissenabschnitte 26, welche jeweils an einem der Schnappriegel 16 angreifen und derart mit diesem/diesen zusammenwirken, dass beim Drehen des ringförmigen Mitnehmers 22 um seine Achse Z jeder Schnappriegel 16 entrastet wird.

Optional sind die ersten und zweiten Kulissenabschnitte 25, 26 an den Ecken eines gedachten gleichschenkeligen Dreiecks angeordnet, wobei der erste Kulissenabschnitt 25 an der Spitze des Dreiecks liegt.

Im Beispiel der Fig. 3a und 3b haben die zweiten Kulissenabschnitte 26 jeweils einen Schrägschlitz 27, in welchen die Schnappriegel 16 mit Zapfen 28 eingreifen, sodass sie beim Drehen des Mitnehmers 22 um seine Achse Z von ihrer verrasteten Stellung (Fig. 3a) in ihre entrastete Stellung (Fig. 3b) gebracht werden. Dabei können der Mitnehmer 22, einer und/oder beide Schnappriegel 16 jeweils in die verrastete Stellung federbeaufschlagt sein.

In einer alternativen Ausführungsform können die zweiten Kulissenabschnitte 26 z.B. durch in Radialrichtung nach außen gerichtete Nocken gebildet sein, welche direkt oder über die Zapfen 28 an den Schnappriegeln 16 angreifen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Vorrichtung zum lösbaren Verankern eines Bauteils (2) an einer Überkopfstruktur (3), insbesondere einer Zimmerdecke, umfassend:
einen Grundkörper (4) zur Montage an der Überkopfstruktur (3),
eine Halterung (5) für den Bauteil (2), und
eine Bedienstange (6) mit einem Griffende (7) und einem gegenüberliegenden Kopfende (8),
wobei der Grundkörper (4) und die Halterung (5) die beiden Teile einer Steckkupplung (15) bilden, welche durch lineares Ineinanderstecken der beiden Teile in einer Steckrichtung (R) schließbar ist, wobei an einem der Teile zumindest ein Schnappriegel (16) quer zur Steckrichtung (R) beweglich gelagert ist und der andere Teil zumindest eine korrespondierende Hinterschneidung (17) zum Verrasten des Schnappriegels (16) in einer ineinandergesteckten Stellung der Teile hat, **dadurch gekennzeichnet,**
**dass** das Kopfende (8) mit einem Gewinde (9) oder Bajonett zum lösbaren Verbinden mit einem Gegengewinde oder -bajonett (11) der Halterung (5) versehen ist, und
**dass** an der Bedienstange (6) eine Auslösestange (12) entlang einer zur Bedienstange (6) parallelen Bahn (13) verschieblich gelagert ist, und dass an der Steckkupplung (15) ein am Schnappriegel (16) angreifender Mitnehmer (22) beweglich gelagert ist, welcher, wenn die Bedienstange (6) mit der Halterung (5) verbunden ist, in die Bahn (13) der Auslösestange (12) ragt und dazu ausgebildet ist, ein Verschieben der Auslösestange (12) in Richtung des Kopfendes (8) der Bedienstange (6) in ein Entrasten des Schnappriegels (16) umzusetzen.

2. Vorrichtung nach Anspruch 1, **dadurch gekennzeichnet, dass** der Grundkörper (4) der genannte eine und die Halterung (5) der genannte andere Teil der Steckkupplung (15) ist.

3. Vorrichtung nach Anspruch 1 oder 2, **dadurch gekennzeichnet, dass** der Grundkörper (4) die Form einer Scheibe hat, in oder auf welche die Halterung (5) ein- bzw. aufsteckbar ist, wobei zumindest zwei über den Umfang der Scheibe verteilte Schnappriegel (16) und korrespondierende Hinterschneidungen (17) vorgesehen sind.

4. Vorrichtung nach Anspruch 3, **dadurch gekennzeichnet, dass** zwei einander diametral gegenüberliegende, gegenläufige Schnappriegel (16) vorgesehen sind.

5. Vorrichtung nach einem der Ansprüche 1 bis 4, **dadurch gekennzeichnet, dass** der Mitnehmer (22) ein am genannten einen Teil der Steckkupplung (15) um seine Achse (Z) drehbar gelagerter Ring ist, der einen ersten, in die genannte Bahn (13) ragenden Kulissenabschnitt (25) zum Zusammenwirken mit der Auslösestange (12) und zumindest einen davon umfangsmäßig beabstandeten zweiten Kulissenabschnitt (26) zum Zusammenwirken mit jeweils einem Schnappriegel (16) hat.

6. Vorrichtung nach den Ansprüchen 4 und 5, **dadurch gekennzeichnet, dass** die ersten und zweiten Kulissenabschnitte (25, 26) an den Ecken eines gedachten gleichschenkligen Dreiecks angeordnet sind, wobei der erste Kulissenabschnitt (25) an der Spitze des Dreiecks liegt.

7. Vorrichtung nach einem der Ansprüche 1 bis 6, **dadurch gekennzeichnet, dass** der Grundkörper (4) elektrische Kontakte (20) zum Kontaktieren des Bauteils (2) hat.

8. Vorrichtung nach einem der Ansprüche 1 bis 7, **dadurch gekennzeichnet, dass** die Auslösestange (12) und/oder der Mitnehmer (22) einander zugewandt je eine schräge Kontaktfläche (23, 24) haben/hat.

9. Vorrichtung nach einem der Ansprüche 1 bis 8, **dadurch gekennzeichnet, dass** der Grundkörper (4) eine Buchse (18) zum Einstecken der Halterung (5) hat.

10. Vorrichtung nach Anspruch 9, **dadurch gekennzeichnet, dass** sich die Buchse (18) in Steckrichtung (R) verengt und/oder die Halterung (5) sich in Steckrichtung (R) verjüngt.

## Claims

1. Apparatus for reversibly fixing a component (2) to an overhead structure (3), in particular a ceiling, comprising:
a base body (4) for mounting on the overhead structure (3),
a support (5) for the component (2), and
an operating rod (6) with a handle end (7) and an opposite head end (8),
wherein the base body (4) and the support (5) form the two parts of a plug-in coupling (15), which can be closed by linearly plugging the two parts into one another in a plugging direction (R), wherein on one of the parts at least one snap latch (16) is mounted movably in perpendicular direction to the insertion direction (R), and the other part has at least one corresponding undercut (17) for locking the snap latch (16) in an plugged position of the parts, **characterized in that**
the head end (8) is provided with a thread (9) or bayonet for detachably connecting with a complementary thread or bayonet (11) of the support (5), and
that, on the operating rod (6), a release rod (12) is mounted slidably along a path (13) parallel to the operating rod (6), and that a driving member (22) engaging with the snap latch (16) is movably mounted on the plug-in coupling (15), which driving member, when the operating rod (6) is connected to the support (5), extends into the path (13) of the release rod (12) and is configured to translate a movement of the release rod (12) towards the head end (8) of the operating rod (6) into an unlocking of the snap latch (16).

2. Apparatus according to claim 1, **characterized in that** the base body (4) is said one part and the support (5) is said other part of the plug-in coupling (15).

3. Apparatus according to claim 1 or 2, **characterized in that** the base body (4) has the shape of a disk, into or onto which the support (5) can be inserted or placed, wherein at least two snap latches (16) distributed around the circumference of the disk and corresponding undercuts (17) are provided.

4. Apparatus according to claim 3, **characterized in that** two diametrically opposed, counter-active snap latches (16) are provided.

5. Apparatus according to any one of the claims 1 to 4, **characterized in that** the driving member (22) is a ring supported rotatably about its axis (Z) on said one part of the plug-in coupling (15), which ring has a first cam segment (25) extending into said path (13) to interact with the release rod (12) and at least one second cam segment (26), spaced in circumferential direction, for interacting with each snap latch (16) .

6. Apparatus according to claims 4 and 5, **characterized in that** the first and second cam segments (25, 26) are arranged at the corners of an imaginary isosceles triangle, wherein the first cam segment (25) is located at the apex of the triangle.

7. Apparatus according to any one of the claims 1 to 6, **characterized in that** the base body (4) has electrical contacts (20) for contacting the component (2).

8. Apparatus according to any one of the claims 1 to 7, **characterized in that** the release rod (12) and/or the driving member (22), facing each other, has/have a respective inclined contact surface (23, 24).

9. Apparatus according to any one of the claims 1 to 8, **characterized in that** the base body (4) has a socket (18) for inserting the support (5).

10. Apparatus according to claim 9, **characterized in that** the socket (18) narrows in the insertion direction (R) and/or the support (5) tapers in the insertion direction (R).

## Revendications

1. Dispositif d'ancrage amovible d'un composant (2) à une structure au-dessus de la tête (3), notamment un plafond, comprenant :
un corps de base (4) prévu pour le montage sur la structure au-dessus de la tête (3),
un support (5) pour le composant (2), et
une tige de commande (6) avec une extrémité de poignée (7) et une extrémité de tête (8) opposée,
dans lequel le corps de base (4) et le support (5) forment les deux parties d'un couplage enfichable (15), lequel peut être fermé par un enfichage linéaire des deux parties dans une direction d'insertion (R), dans lequel au moins un loquet à encliquetage (16) est logé de manière mobile perpendiculairement par rapport à la direction d'insertion (R) sur une des parties et l'autre partie possède au moins une contre-dépouille (17) correspondante pour le verrouillage du loquet à encliquetage (16) dans une position enfichée des parties, **caractérisé en ce**
**que** l'extrémité de tête (8) est munie d'un filetage (9) ou d'un système à baïonnette pour une liaison amovible avec un filetage ou un système à baïonnette (11) complémentaire du support (5), et
**que**, sur la tige de commande (6), une tige de libération (12) est logée coulissante le long d'une piste (13) parallèle à la tige de commande (6), et qu'un membre d'entraînement (22) se mettant en prise sur le loquet à encliquetage (16) est logé mobile sur le couplage enfichable (15), lequel, lorsque la tige de commande (6) est reliée avec le support (5), dépasse dans la piste (13) de la tige de libération (12) et est conçu pour transformer un déplacement de la tige de libération (12) en direction de l'extrémité de tête (8) de la tige de commande (6) en un déverrouillage du loquet à encliquetage (16).

2. Dispositif selon la revendication 1, **caractérisé en ce que** le corps de base (4) est ladite une partie et le support (5) est ladite autre partie du couplage enfichable (15).

3. Dispositif selon la revendication 1 ou 2, **caractérisé en ce que** le corps de base (4) a la forme d'un disque, dans lequel ou sur lequel le support (5) peut être inséré ou posé, dans lequel au moins deux loquets à encliquetage (16) répartis sur le pourtour du disque et des contre-dépouilles (17) correspondantes sont prévus.

4. Dispositif selon la revendication 3, **caractérisé en ce que** deux loquets à encliquetage (16) situés diamétralement opposés l'un par rapport à l'autre et fonctionnant en sens contraires sont prévus.

5. Dispositif selon l'une des revendications 1 à 4, **caractérisé en ce que** le membre d'entraînement (22) est un anneau logé sur ladite une partie du couplage enfichable (15) rotatif autour de son axe (Z), qui a un premier segment coulissant (25) dépassant dans ladite piste (13) pour interagir conjointement avec la tige de libération (12) et au moins un deuxième segment coulissant (26), en étant espacé sur le pourtour, pour interagir conjointement avec respectivement un loquet à encliquetage (16) .

6. Dispositif selon les revendications 4 et 5, **caractérisé en ce que** les premier et deuxième segments coulissants (25, 26) sont disposés aux sommets d'un triangle isocèle virtuel, où le premier segment coulissant (25) se situe au sommet principal du triangle.

7. Dispositif selon l'une des revendications 1 à 6, **caractérisé en ce que** le corps de base (4) possède des contacts électriques (20) pour se mettre en contact avec le composant (2) .

8. Dispositif selon l'une des revendications 1 à 7, **caractérisé en ce que** la tige de libération (12) et/ou le membre d'entraînement (22), l'une face à l'autre, a/ont respectivement une surface de contact (23, 24) inclinée.

9. Dispositif selon l'une des revendications 1 à 8, **caractérisé en ce que** le corps de base (4) a une prise (18) pour l'insertion du support (5).

10. Dispositif selon la revendication 9, **caractérisé en ce que** la prise (18) se rétrécit dans la direction d'insertion (R) et/ou le support (5) s'amenuise dans la direction d'insertion (R).
